# EUROPÄISCHE PATENTSCHRIFT

(11) **EP 4 028 143 B1**
(45) Veröffentlichungstag und Bekanntmachung des Hinweises auf die Patenterteilung: **01.11.2023**
(21) Anmeldenummer: 20751518.0
(22) Anmeldetag: 04.08.2020
(51) Int. Cl.: B01D 29/21, B01D 36/00

(54) **FLUID-REINIGUNGSELEMENT EINES FLUID-REINIGUNGSSYSTEMS ZUM REINIGEN VON FLÜSSIGEM FLUID, FLUID-REINIGUNGSSYSTEM UND DICHTELEMENT EINES FLUID-REINIGUNGSELEMENTS**
FLUID-PURIFYING ELEMENT OF A FLUID-PURIFYING SYSTEM FOR PURIFYING LIQUID FLUID, FLUID-PURIFYING SYSTEM, AND SEALING ELEMENT OF A FLUID-PURIFYING ELEMENT
ÉLÉMENT D'ÉPURATION DE FLUIDE D'UN SYSTÈME D'ÉPURATION DE FLUIDE CONÇU POUR ÉPURER UN FLUIDE LIQUIDE, SYSTÈME D'ÉPURATION DE FLUIDE ET ÉLÉMENT D'ÉTANCHÉITÉ D'UN ÉLÉMENT D'ÉPURATION DE FLUIDE

(30) Priorität: 11.09.2019 DE 102019124432
(43) Veröffentlichungstag der Anmeldung: 20.07.2022
(73) Patentinhaber: MANN+HUMMEL GmbH, 71636 Ludwigsburg (DE)
(72) Erfinder: ROLLE, Arndt-Udo, 70192 Stuttgart (DE); PFLÜGER, Frank, 74343 Sachsenheim (DE)
(74) Vertreter: Mann + Hummel Intellectual Property
(86) Internationale Anmeldenummer: PCT/EP2020/071857
(87) Internationale Veröffentlichungsnummer: WO 2021/047825

(56) Entgegenhaltungen:
- DE-A1-102007 046 208
- DE-A1-102013 020 502
- DE-U1-202006 018 334
- US-A1- 2011 132 828

## Beschreibung

### Technisches Gebiet

Die Erfindung betrifft ein Fluid-Reinigungselement eines Fluid-Reinigungssystems zum Reinigen von flüssigem 2 Fluid nach Anspruch 1, aufweisend wenigstens ein Reinigungsmedium, welches wenigstens einen Elementinnenraum wenigstens teilweise begrenzt, wenigstens einen Endkörper, welcher an einer bezüglich einer gedachten Achse axial stirnseitig an dem Fluid-Reinigungselement angeordnet ist, und wenigstens ein elastisches ringförmiges Dichtelement, welches an einer bezüglich der gedachten Achse radial äußeren Umfangsseite des wenigstens einen Endkörpers angeordnet ist, wobei der wenigstens eine Endkörper wenigstens eine Endkörper-Haltekontur für das wenigstens eine Dichtelement aufweist, die an einer bezüglich der Achse radial äußeren Umfangsseite des wenigstens einen Endkörpers umfangsmäßig wenigstens abschnittsweise zusammenhängend verläuft, wobei das wenigstens eine Dichtelement an seiner bezüglich der Achse radial inneren Umfangsseite eine Dichtungs-Haltekontur aufweist, welche wenigstens abschnittsweise an der Endkörper-Haltekontur des wenigstens einen Endkörpers anliegt, wobei das wenigstens eine Dichtelement wenigstens eine Dichtfläche aufweist, welche sich wenigstens über einen Teil der bezüglich der Achse radial äußeren Umfangsseite des wenigstens einen Dichtelements erstreckt.

Ferner betrifft die Erfindung ein Fluid-Reinigungssystem zum Reinigen von flüssigem Fluid nach Anspruch 13, mit einem Filtergehäuse, umfassend wenigstens ein erstes Gehäuseteil und ein zweites Gehäuseteil, mit wenigstens einem Fluideinlass für zu reinigendem Fluid und wenigstens einen Fluidauslass für gereinigtes Fluid, wobei in dem Filtergehäuse wenigstens ein Fluid-Reinigungselement austauschbar so angeordnet ist, dass es den wenigstens eine Fluideinlass von dem wenigstens einen Fluidauslass trennt, wobei das wenigstens eine Fluid-Reinigungselements aufweist wenigstens ein Reinigungsmedium, welches wenigstens einen Elementinnenraum wenigstens teilweise begrenzt, wenigstens einen Endkörper, welcher an einer bezüglich einer gedachten Achse axial stirnseitig an dem wenigstens Fluid-Reinigungselement angeordnet ist, und wenigstens ein elastisches ringförmiges Dichtelement, welches an einer bezüglich der gedachten Achse radial äußeren Umfangsseite des wenigstens einen Endkörpers angeordnet ist, wobei der wenigstens eine Endkörper wenigstens eine Endkörper-Haltekontur für das wenigstens eine Dichtelement aufweist, die an einer bezüglich der Achse radial äußeren Umfangsseite des wenigstens einen Endkörpers umfangsmäßig wenigstens abschnittsweise zusammenhängend verläuft, wobei das wenigstens eine Dichtelement an seiner bezüglich der Achse radial inneren Umfangsseite eine Dichtungs-Haltekontur aufweist, welche wenigstens abschnittsweise an der Endkörper-Haltekontur des wenigstens einen Endkörpers anliegt, wobei das wenigstens eine Dichtelement wenigstens eine Dichtfläche aufweist, welche sich wenigstens über einen Teil der bezüglich der Achse radial äußeren Umfangsseite des wenigstens einen Dichtelements erstreckt, wobei das wenigstens eine Dichtelement an wenigstens einer Endkörper-Stützfläche des wenigstens einen Endkörpers, an wenigstens einer ersten Gehäuse-Dichtungsanlagefläche des ersten Gehäuseteils und an wenigstens einer zweiten Gehäuse-Dichtungsanlagefläche des zweiten Gehäuseteils jeweils dichtend anliegt.

Außerdem betrifft die Erfindung ein Dichtelement eines Fluid-Reinigungselements für ein Fluid-Reinigungssystem zum Reinigen von flüssigem Fluid nach Anspruch 14, wobei das Dichtelement elastisch und ringförmig ist und an seiner bezüglich einer gedachten Achse radial inneren Umfangsseite eine Dichtungs-Haltekontur aufweist und wobei das Dichtelement wenigstens eine Dichtfläche aufweist, welche sich wenigstens über einen Teil der bezüglich der Achse radial äußeren Umfangsseite des wenigstens einen Dichtelements erstreckt.

### Stand der Technik

Aus WO 2018/033317 A1 ist eine Filterelementanordnung, insbesondere zur Kraftstofffilterung, vorzugsweise mit Wasserabscheidung, umfassend ein Filterelement mit wenigstens einem ringförmigen, insbesondere radial zu durchströmenden Filterbalg und mindestens einer stirnseitig an dem Filterbalg angeordneten Endscheibe sowie umfassend wenigstens ein an der Endscheibe angeordnetes umlaufendes Dichtelement bekannt. Das Dichtelement ist bei bestimmungsgemäßer Verwendung in einem Filtersystem zur Abdichtung von Reinseite gegen Rohseite des Filterelements sowie unter Verpressung zwischen einem ersten Gehäuseteil und einem zweiten Gehäuseteil des Filtersystems zur Abdichtung eines Gehäuseinneren des Filtersystems gegen eine Umgebung des Filtersystems vorgesehen. Auch DE102013020502 offenbart eine Filterelelementanordung dieser Art.

Der Erfindung liegt die Aufgabe zugrunde, ein Fluid-Reinigungselement, ein Fluid-Reinigungssystem und ein Dichtelement der eingangs genannten Art zu gestalten, bei denen ein Aufwand für die Anordnung des wenigstens einen Dichtelements an dem wenigstens einen Endkörper verringert und/oder eine Funktion und/oder Zuverlässigkeit des wenigstens einen Dichtelements verbessert werden kann.

### Offenbarung der Erfindung

Die Aufgabe wird erfindungsgemäß bei dem Fluid-Reinigungselement dadurch gelöst, dass wenigstens eine Endkörper-Haltekontur wenigstens einen Vorsprung aufweist, welcher sich bezüglich der Achse wenigstens teilumfänglich und nach radial außen erstreckt und sich von radial innen nach radial außen verjüngt, und wenigstens eine Dichtungs-Haltekontur wenigstens eine V-förmige Vertiefung aufweist, welche sich bezüglich der Achse wenigstens teilumfänglich und nach radial außen erstreckt, wobei die wenigstens eine Endkörper-Haltekontur wenigstens teilweise in die wenigstens eine Dichtungs-Haltekontur eingreift.

Erfindungsgemäß ist aufseiten des wenigstens einen Endkörpers ein Vorsprung vorgesehen, welcher in wenigstens eine entsprechende Vertiefung aufseiten des Dichtelements eingreift. Wegen der Vertiefung wird der Materialaufwand bei dem erfindungsgemäßen wenigstens einen Dichtelement gegenüber einem Dichtelement, wie es aus dem Stand der Technik bekannt ist, entsprechend verringert. Ferner wird durch die hervorstehende Endkörper-Haltekontur eine Kraftübertragung zwischen dem wenigstens einen Dichtelement und dem wenigstens einen Endkörper verbessert. Der Vorsprung der wenigstens einen Endkörper-Haltekontur, der sich von radial innen nach radial außen verjüngt, kann präzise in die wenigstens eine Dichtungs-Haltekontur eingebracht werden, so dass der Sitz des wenigstens einen Dichtelements auf dem wenigstens einen Endkörper weiter verbessert wird. Insgesamt kann so die Funktion und die Zuverlässigkeit des wenigstens einen Dichtelements verbessert werden.

Vorteilhafterweise kann das wenigstens eine Dichtelement an wenigstens einem Endkörper angeordnet sein, welcher sich bestimmungsgemäß räumlich unten befindet. Auf diese Weise kann mit Hilfe des wenigstens einen Dichtelements wenigstens ein Bereich räumlich oberhalb des wenigstens einen Endkörpers von wenigstens einem Bereich räumlich unterhalb des wenigstens einen Endkörpers abgedichtet werden.

Vorteilhafterweise kann der wenigstens eine Endkörper als Endscheibe ausgestaltet sein. Endscheiben können in bezüglich der Achse axialer Richtung flach und somit platzsparender ausgestaltet sein.

Vorteilhafterweise kann es sich bei wenigstens einem Fluid-Reinigungselement um ein Filterelement handeln. Mit einem Filterelement können Partikel aus dem zu reinigenden Fluid herausgefiltert werden. Entsprechend kann das Fluid-Reinigungssystem ein Fluid-Filtersystems ein.

Alternativ kann es sich vorteilhafterweise bei dem Fluid-Reinigungselement um ein Wasser-Abscheideelement handeln. Mit einem Wasser-Abscheideelement kann mit dem zu reinigenden Fluid mitgetragenes Wasser abgeschieden werden. Entsprechend kann das Fluid-Reinigungssystem ein Fluid-Wasserabscheidesystem sein.

Alternativ kann es sich bei dem Fluid-Reinigungselement um ein kombiniertes Filter-Wasserabscheider-Element handeln. Auf diese Weise können mittels des Fluid-Reinigungselements aus dem zu reinigenden Fluid sowohl Partikel als auch Wasser abgeschieden werden.

Bei dem Fluid-Reinigungselement kann es sich vorteilhafterweise um ein sog. Rund-element, insbesondere Rundfilterelement, handeln.

Das Reinigungsmedium kann vorteilhafterweise bezüglich der Achse umfangsmäßig geschlossen oder offen sein. Das Reinigungsmedium kann insbesondere sternförmig, bevorzugt zickzackförmig oder wellenförmig, gefaltet oder gebogen sein. Das Reinigungsmedium kann auch ungefaltet oder ungebogen sein.

Bei dem Reinigungsmedium kann es sich um Filterpapier, Filtervlies, Filterschaum, Meltblown, Non-woven, Gewebe oder ein andersartiges zur Filtrierung von flüssigem Fluid geeignetes Filtermedium oder eine Kombination aus unterschiedlichen Filtermedien handeln. Das Reinigungsmedium kann einlagig oder mehrlagig sein. Vorteilhafterweise kann das Reinigungsmedium faltbar und/oder biegbar sein.

Das Fluid-Reinigungselement kann vorteilhafterweise Teil eines Kraftstofffilters oder Motorölfilters einer Brennkraftmaschine, insbesondere eines Kraftfahrzeugs sein. Die Erfindung ist jedoch nicht beschränkt auf Motorölfilter oder Kraftstofffilter von Brennkraftmaschinen von Kraftfahrzeugen. Vielmehr kann sie auch bei andersartigen Flüssigkeitssystemen, insbesondere Hydrauliksystemen, Kühlsystemen, Fluidsystemen mit Harnstoffwasserlösung oder dergleichen, von Kraftfahrzeugen oder anderen Maschinen, insbesondere Landmaschinen oder Baumaschinen, verwendet werden. Der Flüssigkeitsfilter kann auch außerhalb der Kraftfahrzeugtechnik, insbesondere bei Industriemotoren, eingesetzt werden.

Die Erfindung kann bei Kraftfahrzeugen, insbesondere Personenkraftwagen, Lastkraftwagen, Bussen, landwirtschaftlichen und/oder Bau-Fahrzeugen, Bau-/Landmaschinen, Kompressoren, Industriemotoren oder sonstigen Geräten insbesondere mit Verbrennungsmotoren eingesetzt werden. Die Erfindung kann bei Land-, Wasser- und/oder Luftfahrzeugen Verwendung finden.

Bei einer vorteilhaften Ausführungsform kann wenigstens eine Endkörper-Haltekontur ein V-förmiges oder U-förmiges Profil aufweisen.

Bei einem V-förmigen Profil können die Flanken der Endkörper-Haltekontur oder der Dichtungs-Haltekontur schräg zueinander verlaufen. Auf diese Weise können mit den Flanken in axialer Richtung und in radialer Richtung wirkende Dichtungsanlageflächen oder Dichtungsflächen realisiert werden. Da sich der Vorsprung erfindungsgemäß von radial innen nach radial außen verjüngt, kann man auch von einem Querschnitt in Form eines nach innen geöffneten 'V' sprechen.

Bei einem V-förmigen Profil kann der Materialaufwand für das wenigstens eine Dichtelement weiter verringert werden.

Alternativ kann wenigstens eine Endkörper-Haltekontur auch als insbesondere beliebig konvexe Geometrie realisiert sein. Vorteilhafterweise kann wenigstens eine Endkörper-Haltekontur, insbesondere wenigstens eine Endkörper-Haltekontur mit einer konvexen Geometrie, zwei insbesondere spiegelsymmetrisch zueinander stehende Tangenten ausbilden.

Entsprechend kann wenigstens eine V-förmige Dichtungs-Haltekontur zwei insbesondere spiegelsymmetrisch zueinander stehende Tangenten ausbilden.

Bei einer weiteren vorteilhaften Ausführungsform kann ein Winkel zwischen den Flanken wenigstens einer V-förmigen Endkörper-Haltekontur etwa zwischen 25° und 70° betragen, und/ oder ein Winkel zwischen den Flanken wenigstens einer V-förmigen Dichtungs-Haltekontur kann etwa zwischen 25° und 70° betragen. Es hat sich gezeigt, dass innerhalb dieses Winkelbereichs eine gute Stabilität und eine gute Dichtwirkung erzielt werden kann.

Bei einer weiteren vorteilhaften Ausführungsform kann das wenigstens eine Dichtelement an seiner bezüglich der Achse radial inneren Umfangsseite wenigstens eine Dichtelement-Stützfläche aufweisen, wobei wenigstens ein Teil der wenigstens einen Dichtelement-Stützfläche als Dichtfläche ausgebildet ist, und/oder der wenigstens eine Endkörper kann an seiner bezüglich der Achse radial äußeren Umfangsseite wenigstens eine Endkörper-Stützfläche aufweisen, wobei wenigstens ein Teil der wenigstens einen Endkörper-Stützfläche als Dichtfläche ausgebildet ist. Auf diese Weise kann wenigstens eine Dichtelement-Stützfläche des wenigstens einen Dichtelements an wenigstens einem Teil der wenigstens einen Endkörper-Stützfläche des wenigstens einen Endkörpers dichtend anliegen. Auf diese Weise kann eine Stütz- und/oder Dichtwirkung zwischen dem wenigstens einen Dichtelement und dem wenigstens einen Endkörper verbessert werden. Mithilfe der nach radial innen gerichteten wenigstens einen Dichtelement-Stützfläche und der nach radial außen gerichteten wenigstens einen Endkörper-Stützfläche kann ein Strömungsbypass vorbei an dem Fluid-Reinigungselement unterbunden werden.

Vorteilhafterweise kann wenigstens eine Dichtelement-Stützfläche im Bereich der wenigstens einen Vertiefung der wenigstens einen Dichtungs-Haltekontur angeordnet sein. Auf diese Weise kann im Bereich der Vertiefung eine Stütz- und/oder Dichtwirkung verbessert werden.

Alternativ oder zusätzlich kann vorteilhafterweise wenigstens eine Dichtelement-Stützfläche außerhalb wenigstens einer Vertiefung der wenigstens einen Dichtungs-Haltekontur angeordnet sein. Auf diese Weise kann außerhalb der Vertiefung eine Stütz- und/oder Dichtwirkung verbessert werden.

Bei einer weiteren vorteilhaften Ausführungsform können wenigstens zwei nach radial innen gerichtete Dichtelement-Stützflächen insbesondere symmetrisch auf axial gegenüberliegenden Seiten wenigstens einer V-förmigen Vertiefung angeordnet sein, und/oder wenigstens zwei nach radial außen gerichtete Endkörper-Stützflächen können insbesondere symmetrisch auf axial gegenüberliegenden Seiten wenigstens eines Vorsprungs der wenigstens einen Endkörper-Haltekontur angeordnet sein. Auf diese Weise kann die Stütz- und/oder Dichtwirkung weiter verbessert werden.

Vorteilhafterweise kann wenigstens eine Dichtelement-Stützfläche im Bereich der wenigstens einen Vertiefung mit einer entsprechenden Endkörper-Stützfläche an dem wenigstens einen Vorsprung der wenigstens einen Endkörper-Haltekontur dichtend zusammenwirken. Wenigstens eine Dichtelement-Stützfläche in einem Bereich außerhalb der wenigstens einen Vertiefung des wenigstens einen Dichtelements kann mit entsprechenden Endkörper-Stützflächen aufseiten des wenigstens einen Endkörpers stützend und/oder dichtend zusammenwirken.

Alternativ oder zusätzlich kann vorteilhafterweise wenigstens eine Endkörper-Stützfläche im Bereich des wenigstens einen Vorsprungs der wenigstens einen Endkörper-Haltekontur angeordnet sein. Auf diese Weise kann die Endkörper-Stützfläche mit der entsprechenden Dichtelement-Stützfläche aufseiten des wenigstens einen Dichtelements zusammenwirken.

Alternativ oder zusätzlich kann vorteilhafterweise wenigstens eine Endkörper-Stützfläche außerhalb des wenigstens einen Vorsprungs angeordnet sein. Auf diese Weise kann die wenigstens eine Endkörper-Stützfläche stützend und/oder dichtend mit wenigstens einer Dichtelement-Stützfläche außerhalb der wenigstens einen Vertiefung der wenigstens einen Dichtungs-Haltekontur zusammenwirken.

Vorteilhafterweise kann sich wenigstens eine Dichtelement-Stützfläche des wenigstens einen Dichtelements an seiner bezüglich der Achse radial inneren Umfangsseite zusammenhängend erstrecken. Auf diese Weise kann eine flächig zusammenhängende Stütz- und/oder Dichtwirkung erzielt werden. Die Dichtelement-Stützfläche kann sich über Bereiche innerhalb der Vertiefung der Dichtungs-Haltekontur und Bereiche außerhalb der Vertiefung der Dichtungs-Haltekontur erstrecken. Auf diese Weise kann die Dichtelement-Stützfläche und damit die Stütz- und/ oder Dichtungswirkung weiter vergrößert werden.

Vorteilhafterweise kann sich wenigstens eine Endkörper-Stützfläche des wenigstens einen Endkörpers an seiner bezüglich der Achse radial äußeren Umfangsseite zusammenhängend erstrecken. Auf diese Weise kann eine flächig zusammenhängende Stütz- und/oder Dichtwirkung erzielt werden. Die wenigstens eine Endkörper-Stützfläche kann sich über Bereiche innerhalb des Vorsprungs der Endkörper-Haltekontur und Bereiche außerhalb des Vorsprungs der Endkörper-Haltekontur erstrecken. Auf diese Weise kann die Endkörper-Stützfläche und damit die Stütz- und/oder Dichtungswirkung weiter vergrößert werden.

Bei einer weiteren vorteilhaften Ausführungsform kann wenigstens ein Dichtelement an seiner bezüglich der Achse radial äußeren Umfangsseite ein bogenförmiges Profil aufweisen. Auf diese Weise kann das wenigstens eine Dichtelement in bezüglich der Achse axialer und radialer Richtung dichtend wirken.

Vorteilhafterweise kann wenigstens ein Dichtelement als sog. Halbmonddichtung oder als hexagonale Dichtung ausgestaltet sein. Auf diese Weise kann an unterschiedlichen Stellen des wenigstens einen Dichtelements und/oder in unterschiedliche Richtungen, insbesondere in axialer und/oder radialer Richtung, eine entsprechende Dichtwirkung realisiert werden. Das wenigstens eine Dichtelement kann so an räumliche Gegebenheiten eines Filtergehäuses, in dem das Fluid-Reinigungselement angeordnet wird, angepasst werden.

Bei einer weiteren vorteilhaften Ausführungsform kann wenigstens ein Dichtelement auf wenigstens einer bezüglich der Achse axialen Seite wenigstens einen axialen Überstand aufweisen. Mit einem axialen Überstand kann das wenigstens eine Dichtelement in Bereiche greifen, welche das Fluid-Reinigungselement, insbesondere den wenigstens einen Endkörper, in axialer Richtung überragen.

Bei einer weiteren vorteilhaften Ausführungsform kann wenigstens ein Dichtelement an wenigstens einer bezüglich der Achse axialen Stirnseite wenigstens eine Dichtfläche aufweisen. Auf diese Weise kann mit dem wenigstens einen Dichtelement in axialer Richtung eine entsprechende Abdichtung erfolgen.

Vorteilhafterweise kann sich wenigstens eine Dichtfläche des wenigstens einen Dichtelements von der radial äußeren Umfangsseite über wenigstens eine axiale Stirnseite erstrecken. Auf diese Weise kann das wenigstens eine Dichtelement an entsprechenden Dichtungsanlageflächen, insbesondere aufseiten wenigstens eines Gehäuseteils eines Filtergehäuses, dichtend anliegen.

Bei einer weiteren vorteilhaften Ausführungsform kann wenigstens ein Endkörper mit wenigstens einem Dichtelement als Mehrkomponentenbauteil realisiert sein, und/oder wenigstens ein Dichtelement kann an wenigstens einem Endkörper trennbar oder nicht zerstörungsfrei trennbar befestigt sein. Ein Mehrkomponentenbauteil kann einfach und präzise realisiert werden.

Alternativ kann das wenigstens eine Dichtelement trennbar oder nicht zerstörungsfrei trennbar an wenigstens einem Endkörper befestigt sein. Auf diese Weise kann das wenigstens eine Dichtelement getrennt von dem wenigstens einen Endkörper hergestellt und nachträglich zusammengebaut werden.

Vorteilhafterweise kann das wenigstens eine Dichtelement mittels einer stoffflüssigen und/oder formschlüssigen und/oder kraftschlüssigen Verbindung, insbesondere mittels Kleben, Vulkanisieren, einer Steckverbindung, Rastverbindung, Klemmverbindung oder dergleichen, mit dem wenigstens einen Endkörper verbunden sein.

Vorteilhafterweise kann das wenigstens eine Dichtelement zerstörungsfrei trennbar an dem wenigstens einen Endkörper angeordnet sein. Auf diese Weise kann das wenigstens eine Dichtelement insbesondere zu Wartungszwecken von dem wenigstens einen Endkörper getrennt werden.

Vorteilhafterweise kann der wenigstens eine Endkörper wenigstens eine Materialöffnung aufweisen, in oder durch die Material des wenigstens einen Dichtelements hinein- oder hindurchführen kann. Auf diese Weise kann die Verbindung zwischen dem wenigstens einen Dichtelement und dem wenigstens einen Endkörper verbessert werden.

Die wenigstens eine Materialöffnung kann vorteilhafterweise eine Durchspritzöffnung sein. Vorteilhafterweise kann das Material für das wenigstens eine Dichtelement insbesondere mittels Spritzgussverfahrens an den wenigstens einen Endkörper angeformt werden. Dabei kann das Material für das wenigstens eine Dichtelement in oder durch wenigstens eine Durchspritzöffnung fließen. Auf diese Weise kann die Verbindung zwischen dem wenigstens einen Dichtelement und dem wenigstens einen Endkörper verbessert werden.

Bei einer weiteren vorteilhaften Ausführungsform kann der wenigstens eine Endkörper wenigstens eine Fluidverbindung zu dem Elementinnenraum aufweisen. Auf diese Weise kann bei eingebautem Fluid-Reinigungselement in einem Filtergehäuse der Elementinnenraum mit entsprechenden Fluidverbindungen oder fluidführenden Räumen des Filtergehäuses verbunden werden.

Vorteilhafterweise kann der wenigstens eine Endkörper wenigstens eine Wasseraustragsöffnung und/oder wenigstens eine Fluidöffnung für das zu reinigende Fluid oder für gereinigtes Fluid aufweisen, welche mit wenigstens einem Elementinnenraum verbunden sind.

Vorteilhafterweise kann wenigstens eine Wasseraustragsöffnung des wenigstens einen Endkörpers wenigstens einen Elementinnenraum mit wenigstens einem Wassersammelraum verbinden. Auf diese Weise kann das abgeschiedene Wasser aus dem wenigstens einen Elementinnenraum in den wenigstens einen Wassersammelraum gesammelt werden.

Alternativ oder zusätzlich kann der wenigstens eine Endkörper eine Fluidöffnung aufweisen, durch die - je nach Strömungsrichtung des zu reinigenden Fluids durch das Fluid-Reinigungselement - zu reinigendes Fluid in den Elementinnenraum hinein oder gereinigtes Fluid aus dem Elementinnenraum heraus gelangen kann.

Bei einer weiteren vorteilhaften Ausführungsform kann wenigstens ein Reinigungsmedium als Filtermedium ausgestaltet sein und wenigstens einen Elementinnenraum umgeben, und in dem wenigstens einen Elementinnenraum kann wenigstens ein Teil wenigstens einer Wasserabscheideeinrichtung angeordnet sein. Auf diese Weise kann das Fluid-Reinigungselement insgesamt kompakter aufgebaut werden. Mithilfe der Wasserabscheideeinrichtung kann von dem zu reinigenden Fluid mitgeführtes Wasser abgeschieden werden. Bei einer Durchströmung des Reinigungsmediums von radial innen nach radial außen kann so das Wasser nach der Filtrierung des zu reinigenden Fluids abgetrennt werden.

Durch wenigstens eine Wasseraustragsöffnung des wenigstens einen Endkörpers kann mit einer Wasserabscheideeinrichtung von dem zu reinigenden Fluid abgeschiedenes Wasser aus dem Elementinnenraum herausgelangen.

Bei einer weiteren vorteilhaften Ausführungsform kann wenigstens ein Endkörper einteilig mit der wenigstens einen Endkörper-Haltekontur ausgestaltet sein, und/oder wenigstens ein Endkörper kann mehrteilig mit wenigstens einer Endkörper-Haltekontur ausgestaltet sein. Eine einteilige Verbindung kann einfach und stabil realisiert werden. Bei einer mehrteiligen Verbindung kann die wenigstens eine Endkörper-Haltekontur an einem separaten Haltebauteil realisiert sein. Das separate Haltebauteil mit der wenigstens einen Endkörper-Haltekontur kann getrennt von dem restlichen Endkörper hergestellt und nachträglich zusammengebaut werden.

Vorteilhafterweise kann wenigstens eine Endkörper-Haltekontur an wenigstens einem Haltebauteil des wenigstens einen Endkörpers lösbar oder nicht zerstörungsfrei lösbar montiert sein. Auf diese Weise kann die wenigstens eine Endkörper-Haltekontur modular aufgebaut sein.

Bei einer weiteren vorteilhaften Ausführungsform kann auf der Seite des wenigstens einen Reinigungsmediums, welche dem wenigstens einen Endkörper mit dem wenigstens einen Dichtelement bezüglich der Achse axial gegenüberliegt, wenigstens ein weiterer Endkörper angeordnet sein. Auf diese Weise kann das wenigstens eine Reinigungsmedium auf gegenüberliegenden Seiten jeweils mit einem Endkörper gestützt werden.

Ferner wird die Aufgabe erfindungsgemäß bei dem Fluid-Reinigungssystem dadurch gelöst, dass wenigstens eine Endkörper-Haltekontur wenigstens einen Vorsprung aufweist, welcher sich bezüglich der Achse wenigstens teilumfänglich und nach radial außen erstreckt, und wenigstens eine V-förmige Dichtungs-Haltekontur wenigstens eine Vertiefung aufweist, welche sich bezüglich der Achse wenigstens teilumfänglich und nach radial außen erstreckt, wobei die wenigstens eine Endkörper-Haltekontur wenigstens teilweise in die wenigstens eine Dichtungs-Haltekontur eingreift.

Vorteilhafterweise kann das Fluid-Reinigungssystem wenigstens ein erfindungsgemäßes Fluid-Reinigungselement aufweisen.

Außerdem wird die Aufgabe erfindungsgemäß bei dem Dichtelement dadurch gelöst, dass wenigstens eine Dichtungs-Haltekontur wenigstens eine V-förmige Vertiefung aufweist, welche sich bezüglich der Achse wenigstens teilumfänglich und nach radial außen erstreckt.

Vorteilhafterweise kann das Dichtelement ausgestaltet sein für ein erfindungsgemäßes Fluid-Reinigungselement und/oder ein erfindungsgemäßes Fluid-Reinigungssystem.

Im Übrigen gelten die im Zusammenhang mit dem erfindungsgemäßen Fluid-Reinigungselement, dem erfindungsgemäßen Fluid-Reinigungssystem und dem erfindungsgemäßen Dichtelement und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, Beschreibung und den Ansprüchen in Kombination offenbarten Merkmale zweckmäßigerweise auch einzeln betrachten und zu sinnvollen weiteren Kombinationen zusammenfassen. Es zeigen schematisch:
- Figur 1: einen Längsschnitt eines Fluid-Reinigungssystems für flüssiges Fluid gemäß einem ersten Ausführungsbeispiel, mit einem Filterelement, welches in einem Filtergehäuse angeordnet ist, und welches an einem unteren Endkörper ein Dichtelement zum Abdichten gegenüber dem Filtergehäuse aufweist;
- Figur 2: eine Detailansicht des Fluid-Reinigungssystems aus Figur 1 im Bereich des unteren Endkörpers mit dem Dichtelement;
- Figur 3: einen Längsschnitt des Dichtelements des Filterelements aus Figuren 1 und 2;
- Figur 4: einen Längsschnitt eines Wasserabscheider-Elements eines Fluid-Reinigungssystems gemäß einem zweiten Ausführungsbeispiel.

In den Figuren sind gleiche Bauteile mit gleichen Bezugszeichen versehen.

### Ausführungsform(en) der Erfindung

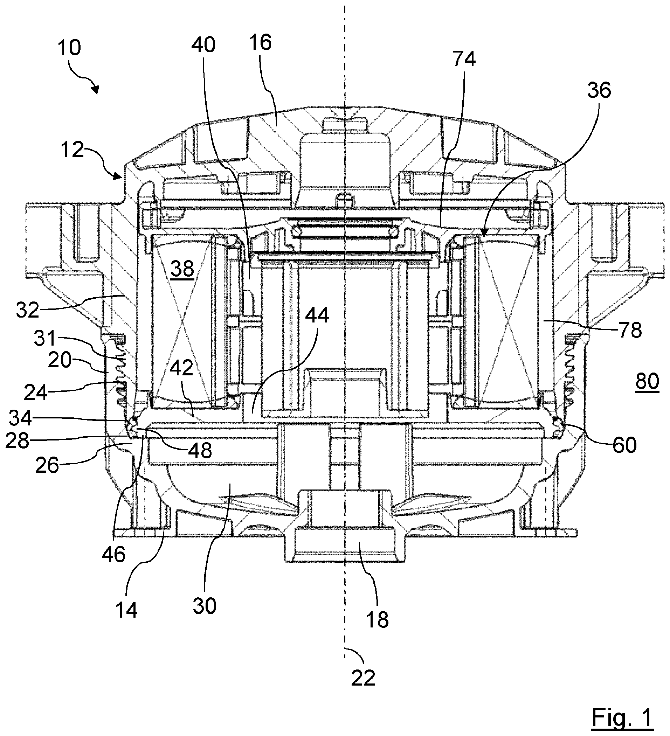

In Figur 1 ist ein Fluid-Reinigungssystem 10 in Form eines kombinierten Filter-Wasserabscheidersystems zur Reinigung von flüssigem Fluid, beispielsweise Kraftstoff oder Motoröl, in einem Längsschnitt gezeigt. Das Fluid-Reinigungssystem 10 kann in einer Flüssigkeitsleitung, beispielsweise einer Kraftstoffleitung oder Motorölleitung einer Brennkraftmaschine, angeordnet sein. Die Brennkraftmaschine kann Teil eines Kraftfahrzeugs sein.

Das Fluid-Reinigungssystem 10 umfasst ein Filtergehäuse 12 mit einem beispielhaft becherförmigen ersten Gehäuseteil 14, in Figur 1 unten, und einem beispielhaft becherförmigen zweiten Gehäuseteil 16 oben. Das Filtergehäuse 12 verfügt über einen Fluid-einlass für zu reinigendes Fluid und einen Fluidauslass für gereinigtes Fluid, welche beide in der Darstellung in Figur 1 verdeckt und daher nicht gezeigt sind.

Außerdem weist das Filtergehäuse 12 einen Wasserablass 18 auf, durch den mit dem Fluid-Reinigungssystem 10 von dem Fluid abgeschiedenes Wasser aus dem Filtergehäuse 12 abgelassen werden kann. Der Wasserablass 18 befindet sich beispielhaft im Boden des ersten Gehäuseteils 14.

Eine Umfangswand 20 des ersten Gehäuseteils 14 ist im Bereich ihres freien Randes an ihrer Innenseite kreiszylindrisch koaxial zu einer Achse 22.

Wenn im Folgenden von "radial", "axial", "koaxial", "umfangsmäßig" oder dergleichen die Rede ist, so bezieht sich dies, sofern nicht anders erwähnt, auf die Achse 22.

Im Bereich des freien Randes weist die Umfangswand 20 ein Innengewinde 24 auf. Auf der dem freien Rand axial abgewandten Seite des Innengewindes 24 geht die Umfangswand 20 in eine Stufe 26 über. Die Stufe 26 erstreckt sich radial nach innen.

Die radial innere Umfangsseite der Umfangswand 20 weist eine erste Gehäuse-Dichtungsanlagefläche 28 auf. Die erste Gehäuse-Dichtungsanlagefläche 28 erstreckt sich von dem Innengewinde 24 bis über die Stufe 26. Die erste Gehäuse-Dichtungsanlagefläche 28 ist umfangsmäßig zusammenhängend.

Auf der dem Innengewinde 24 abgewandten Bodenseite weist das erste Gehäuseteil 14 einen Wassersammelraum 30 auf.

Das zweite Gehäuseteil 16 weist im Bereich des freien Randes seiner Umfangswand 32 ein koaxiales Außengewinde 31 auf, welches zu dem Innengewinde 24 passt. Der freie Rand der Umfangswand 32 weist eine zweite Gehäuse-Dichtungsanlagefläche 34 auf. Die zweite Gehäuse-Dichtungsanlagefläche 34 ist umfangsmäßig zusammenhängend. Die zweite Gehäuse-Dichtungsanlagefläche 34 ist schräg nach radial innen zu dem ersten Gehäuseteil 14 hin gerichtet.

Im Filtergehäuse 12 ist ein Fluid-Reinigungselement in Form eines Filterelements 36 so angeordnet, dass es den Fluideinlass des Filtergehäuses 12 von dem Fluidauslass trennt. Bei dem Filterelement 36 handelt es sich beispielhaft um ein sog. Rundfilterelement.

Das Filterelement 36 umfasst ein Reinigungsmedium in Form eines Filtermediums 38, welches einen Elementinnenraum 40, durch den die Achse 22 führt, umfangsmäßig zusammenhängend umgibt.

Das Filtermedium 38 besteht aus Material, welches für das zu reinigende Fluid durchlässig ist und das sich zur Filtrierung des Fluids eignet. Beispielsweise kann das Filtermedium 38 Filtervlies, Filterpapier oder dergleichen aufweisen oder daraus bestehen.

Auf der axial unteren Stirnseite des Filtermediums 38, welche dem ersten Gehäuseteil 14 zugewandt ist, ist ein erster Endkörper 42 befestigt. Der erste Endkörper 42 hat die Form einer Ringscheibe und kann als Endscheibe bezeichnet werden. Der erste Endkörper 42 dient dem Abschluss des Filtermediums 38 an der Stirnseite und zur mechanischen Stabilisierung.

Der erste Endkörper 42 weist eine koaxiale Wasserauslassöffnung 44 auf. Die Wasserauslassöffnung 44 bildet eine Flüssigkeitsverbindung zwischen dem Elementinnenraum 40 und dem Wassersammelraum 30.

Der erste Endkörper 42 weist auf seiner dem Filtermedium 38 abgewandten Seite im Bereich seines radial äußeren Randes einen kreiszylindrischen Haltebereich 46 auf.

An der radial äußeren Umfangsseite des Haltebereichs 46 ist eine umfangsmäßig zusammenhängende Endkörper-Haltekontur 48 in Form eines Vorsprungs angeordnet. Die Endkörper-Haltekontur 48 hat ein etwa V-förmiges Profil, wobei die radial äußere Spitze abgerundet ist. Die Endkörper-Haltekontur 48 ist beispielhaft symmetrisch bezüglich einer gedachten Schnittebene 50, welche senkrecht zur Achse 22 verläuft. Ein jeweiliger Winkel 52 zwischen den Flanken 54 beträgt etwa 65°.

Die Bereiche der radial äußeren Umfangsseite des Haltebereichs 46 oberhalb und unterhalb der Endkörper-Haltekontur 48 erstrecken sich umfangsmäßig und in axialer Richtung.

Der Haltebereich 46 weist an seiner radial äußeren Umfangsseite eine umfangsmäßig zusammenhängende radial äußere Endkörper-Stützfläche 56 auf. Die radial äußere Endkörper-Stützfläche 56 erstreckt sich zusammenhängend zwischen dem axialen Bereich oberhalb und dem axialen Bereich unterhalb der Endkörper-Haltekontur 48 und entlang der Endkörper-Haltekontur 48.

Der Haltebereich 46 weist an seinem freien stirnseitigen Rand einen Abstützbereich 58 auf. Der Abstützbereich 48 ist eben und verläuft radial und umfangsmäßig. Mit dem Abstützbereich 58 wird das Filterelement 36 gegen die Stufe 26 des ersten Gehäuseteils 14 abgestützt.

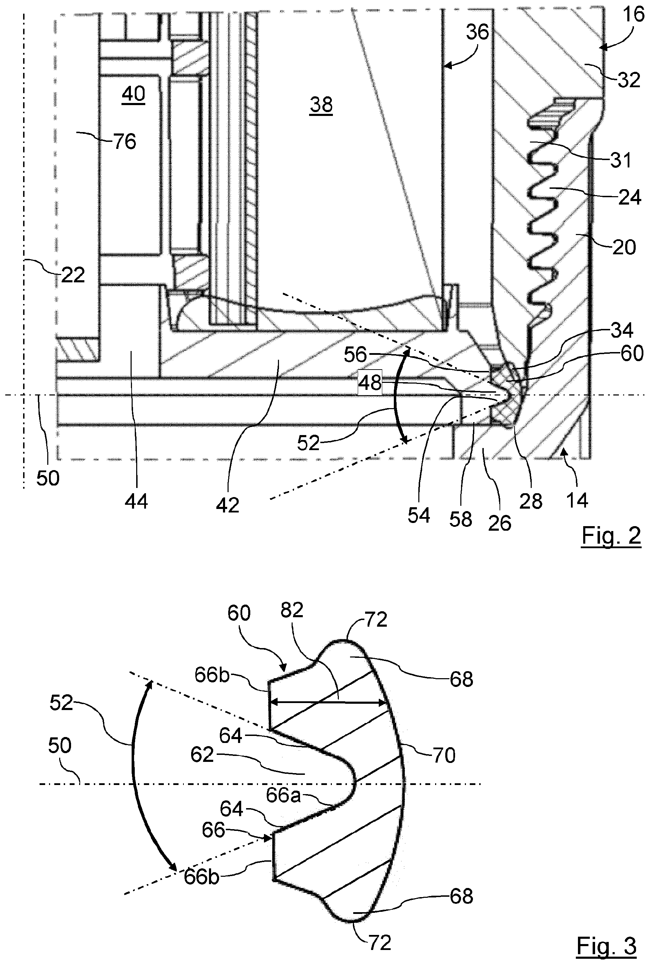

Auf dem Haltebereich 46 des ersten Endkörpers 42 ist ein kreisringförmiges elastisches Dichtelement 60 angeordnet. Eine Seite des Dichtelements 60 ist im Profil in Figur 3 gezeigt. Das Dichtelement 60 besteht aus einem flexiblen, beispielhaft elastischen, Dichtungsmaterial. Beispielhaft ist das Dichtelement 60 als sog. Halbmonddichtung ausgestaltet.

Auf seiner radial inneren Umfangsseite weist das Dichtelement 60 eine Dichtungs-Haltekontur 62 in Form einer Vertiefung auf. Die Dichtungs-Haltekontur 62 hat beispielhaft ein etwa V-förmiges Profil, wobei die Spitze abgerundet ist. Die Dichtungs-Haltekontur 62 ist zur radial inneren Umfangsseite hin offen. Die Dichtungs-Haltekontur 62 ist etwa komplementär zur Endkörper-Haltekontur 48.

Das Dichtelement 60 ist symmetrisch bezüglich der Schnittebene 50. Ein Winkel zwischen den Flanken 64 der Endkörper-Haltekontur 48 entspricht dem Winkel 52 aufseiten der Endkörper-Haltekontur 48 mit beispielhaft etwa 65° und ist der besseren Übersichtlichkeit wegen mit dem gleichen Bezugszeichen versehen. In Bereichen axial neben, in Figuren 1 bis 3 oberhalb und unterhalb der Dichtungs-Haltekontur 62, erstreckt sich die radial innere Umfangsseite des Dichtelements 60 axial und umfangmäßig.

Die radial innere Umfangsseite des Dichtelements 60 bildet eine radial innere Dichtelement-Stützfläche 66. Die radial innere Dichtelement-Stützfläche 66 setzt sich zusammen aus einem Kontur-Stützflächenabschnitt 66a innerhalb der Dichtungs-Haltekontur 62 und zwei Radial-Stützflächenabschnitten 66b im Bereich der beiden axial an die Dichtungs-Haltekontur 62 angrenzenden Bereiche. Kontur-Stützflächenabschnitt 66a geht zusammenhängend jeweils in die Radial-Stützflächenabschnitte 66b über. Die radial innere Dichtelement-Stützfläche 66 erstreckt sich insgesamt über die gesamte radial innere Umfangsseite der Dichtungs-Haltekontur 62. Die Dichtelement-Stützfläche 66 mit dem Kontur-Stützflächenabschnitt 66a und den Radial-Dichtflächenabschnitten 66b dient als Stützfläche mit dichtender Wirkung gegenüber dem Endkörper 42 bzw. der Endkörper-Haltekontur 48.

Die beiden nach radial innen gerichteten Radial-Stützflächenabschnitte 66b sind symmetrisch auf axial gegenüberliegenden Seiten der V-förmigen Vertiefung der Dichtungs-Haltekontur 62 angeordnet.

Auf Höhe der Radial-Stützflächenabschnitten 66b hat das Dichtelement 60 jeweils eine durchgängige Radialausdehnung 82 beispielhaft von wenigstens etwa 2,7 mm.

Im Bereich der Flanken 64 verläuft der Kontur-Stützflächenabschnitt 66a unter einem Winkel zur Normalenrichtung zur Achse 22 (siehe Schnittebene 50) also nicht ausschließlich in radialer Richtung und nicht ausschließlich in axialer Richtung. Der Kontur-Stützflächenabschnitt 66a liegt sowohl in axialer Richtung als auch in radialer Richtung dichtend wirkend im Bereich der Flanken 54 der Endkörper-Haltekontur 48 an der Endkörper-Stützfläche 56 an. Außerhalb der Dichtungs-Haltekontur 62 liegen die Radial-Stützflächenabschnitte 66b in radialer Richtung dichtend an den axialen Bereichen der Endkörper-Stützfläche 56 an.

Von der radial inneren Umfangsseite nach radial außen betrachtet weitet sich das Dichtelement 60 zunächst in axialer Richtung auf und geht im Bereich der gegenüberliegenden axialen Stirnseiten in einen jeweiligen axialen Überstand 68 über.

Die radial äußere Umfangsseite des Dichtelements 60 ist in einem Bereich zwischen den axialen Überständen 68 von radial außen betrachtet konvex gebogen. Im Profil hat die radial äußere Umfangsseite die Form eines Halbmonds.

Die radial äußere Umfangsseite des Dichtelements 60 bildet eine radial äußere Dichtfläche 70. Die radial äußere Dichtfläche 70 geht an den axialen Überständen 68 jeweils zusammenhängend in die jeweilige axiale Dichtfläche 72 über.

Das Filterelement 36 weist ferner auf der dem ersten Endkörper 42 axial abgewandten Seite einen zweiten Endkörper 74 auf.

In dem Elementinnenraum 40 ist außerdem eine Wasserabscheideeinrichtung 76 angeordnet, mit der mit dem zu reinigenden Fluid mitgeführtes Wasser abgeschieden werden kann.

Zum Einbau wird das Filterelement 36 bei geöffnetem Filtergehäuse mit dem ersten Endkörper 42 voran in axialer Richtung soweit in das erste Gehäuseteil 14 gesteckt, bis der Abstützbereich 58 des ersten Endkörpers 42 an der Stufe 26 des ersten Gehäuseteils 14 anliegt. Anschließend wird das zweite Gehäuseteil 16 auf das erste Gehäuseteil 14 geschraubt.

Alternativ kann das Filterelement 36 bei geöffnetem Filtergehäuse 12 mit dem zweiten Endkörper 74 voran in axialer Richtung in das zweite Gehäuseteil 16 gesteckt werden. Das zweite Gehäuseteil 16 mit dem darin gehaltenen Filterelement 36 kann anschließend in das erste Gehäuseteil 14 geschraubt werden. Beim Zusammenschrauben des Filtergehäuses 12 wird das Filterelement 36 in dem ersten Gehäuseteil 14 in seine Endposition gebracht, in der der Abstützbereich 58 des ersten Endkörpers 42 an der Stufe 26 des ersten Gehäuseteils 14 anliegt.

In dem Endmontagezustand des Fluid-Reinigungssystems 10, welcher in Figuren 1 und 2 dargestellt ist, wird das Dichtelement 60 zwischen der ersten Gehäuse-Dichtungsanlagefläche 28 des ersten Gehäuseteils 14, der zweiten Gehäuse-Dichtungsanlagefläche 34 des zweiten Gehäuseteils 16 und dem Haltebereich 16 des ersten Endkörpers 42 verpresst. Dabei liegt die radial innere Dichtelement-Stützfläche 66 flächig dichtend an der Endkörper-Stützfläche 56 an. Die radial äußere Dichtfläche 70 und die obere axiale Dichtfläche 62 liegen jeweils flächig dichtend an der zweiten Gehäuse-Dichtungsanlagefläche 34 des zweiten Gehäuseteils 16 an. Die radial äußere Dichtfläche 70 und die untere axiale Dichtfläche 72 liegen jeweils flächig dichtend an der ersten Gehäuse-Dichtungsanlagefläche 28 des ersten Gehäuseteils 14 an. Auf diese Weise werden die Rohseite 78 des Filterelements 36, der Wassersammelraum 30 und die Umgebung 80 jeweils untereinander voneinander getrennt. Insgesamt werden so drei Bereiche mit dem Dichtelement 60 dichtend voneinander getrennt.

Die Rohseite 78 ist der Bereich innerhalb des Filtergehäuses 12, von dem das zu reinigende Fluid zu dem Filtermedium 38 gelangt. Beispielhaft befindet sich ein Teil der Rohseite 78 radial außerhalb des Filtermediums 38. Die Rohseite 78 ist mit dem Fluid-einlass des Filtergehäuses 12 verbunden. Die in den Figuren nicht bezeichnete Reinseite ist mit dem Fluidauslass des Filtergehäuses 12 verbunden.

Beim Betrieb des Fluid-Reinigungssystems 10 wird das zu reinigende Fluid durch den Fluideinlass der Rohseite 78 zugeführt. Das Fluid strömt von radial außen nach radial innen durch das Filtermedium 38, wird dabei gereinigt und gelangt in den Element-innenraum 40. Das gereinigte Fluid strömt der Wasserabscheideeinrichtung 76 zu, mit der etwa enthaltenes Wasser abgeschieden wird. Das gereinigte und von Wasser befreite Fluid verlässt das Fluid-Reinigungssystems 10 durch den Fluidauslass.

Das abgeschiedene Wasser verlässt den Elementinnenraum 40 durch die Wasserauslassöffnung 44 und strömt in den Wassersammelraum 30. Das gesammelte Wasser kann durch den Wasserablass 18 aus dem Wassersammelraum 30 abgelassen werden.

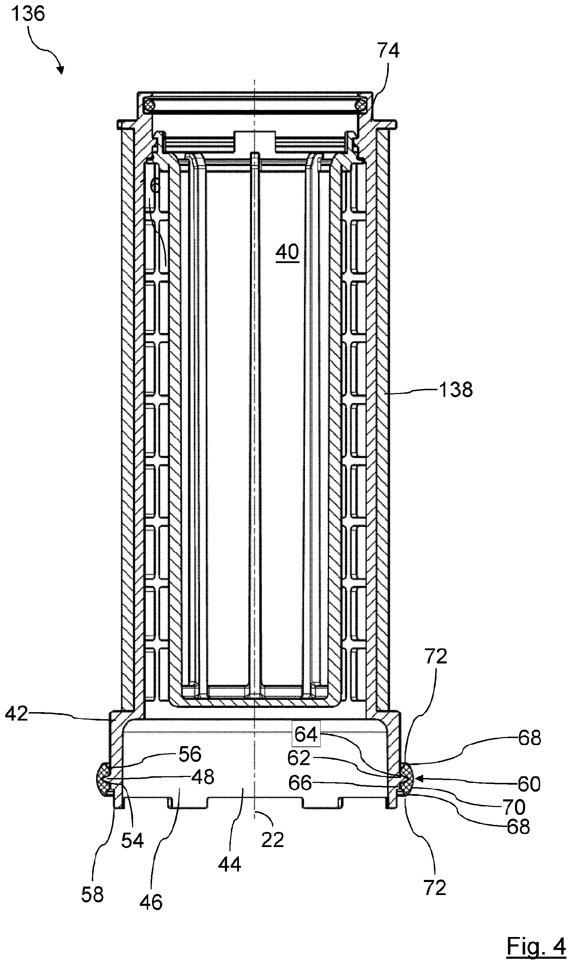

In Figur 4 ist ein Wasser-Abscheideelement 136 eines Fluid-Reinigungssystems gemäß dem zweiten Ausführungsbeispiel gezeigt. Diejenigen Elemente, die zu denen des ersten Ausführungsbeispiels aus Figuren 1 bis 3 ähnlich sind, sind mit den gleichen Bezugszeichen versehen. Das zweite Ausführungsbeispiel unterscheidet sich von dem ersten Ausführungsbeispiel dadurch, dass das Wasser-Reinigungselement 136 ausschließlich zum Abscheiden von Wasser ausgestaltet ist. Anstelle des Filtermediums 38 sind entsprechend Wasser-Abscheidemedien 138, beispielsweise Koaleszenzmedien, vorgesehen, welche den Elementinnenraum 40 umfangsmäßig umgeben.

## Patentansprüche

1. Fluid-Reinigungselement (36; 136) eines Fluid-Reinigungssystems (10) zum Reinigen von flüssigem Fluid, aufweisend wenigstens ein Reinigungsmedium (38; 138), welches wenigstens einen Elementinnenraum (40) wenigstens teilweise begrenzt, wenigstens einen Endkörper (42), welcher an einer bezüglich einer gedachten Achse (22) axial stirnseitig an dem Fluid-Reinigungselement (36; 136) angeordnet ist, und wenigstens ein elastisches, ringförmiges Dichtelement (60), welches an einer bezüglich der gedachten Achse (22) radial äußeren Umfangsseite des wenigstens einen Endkörpers (42) angeordnet ist, wobei der Endkörper (42) wenigstens eine Endkörper-Haltekontur (48) für das Dichtelement (60) aufweist, die an einer bezüglich der Achse (22) radial äußeren Umfangsseite des Endkörpers (42) umfangsmäßig wenigstens abschnittsweise zusammenhängend verläuft, wobei das Dichtelement (60) an seiner bezüglich der Achse (22) radial inneren Umfangsseite eine Dichtungs-Haltekontur (62) aufweist, welche wenigstens abschnittsweise an der Endkörper-Haltekontur (48) des Endkörpers (42) anliegt, wobei das Dichtelement (60) wenigstens eine Dichtfläche (70) aufweist, welche sich wenigstens über einen Teil der bezüglich der Achse (22) radial äußeren Umfangsseite des Dichtelements (60) erstreckt, **dadurch gekennzeichnet, dass** die Endkörper-Haltekontur (48) wenigstens einen Vorsprung aufweist, welcher sich bezüglich der Achse (22) wenigstens teilumfänglich und nach radial außen erstreckt und sich von radial innen nach radial außen verjüngt, und die Dichtungs-Haltekontur (62) wenigstens eine V-förmige Vertiefung aufweist, welche sich bezüglich der Achse (22) wenigstens teilumfänglich und nach radial außen erstreckt, wobei die Endkörper-Haltekontur (48) wenigstens teilweise in die Dichtungs-Haltekontur (62) eingreift.

2. Fluid-Reinigungselement nach Anspruch 1, **dadurch gekennzeichnet, dass** die Endkörper-Haltekontur (48) ein V-förmiges oder U-förmiges Profil aufweist.

3. Fluid-Reinigungselement nach Anspruch 1 oder 2, **dadurch gekennzeichnet, dass** ein Winkel zwischen den Flanken (54) der V-förmigen Endkörper-Haltekontur (48) etwa zwischen 25° und 70° beträgt und/oder ein Winkel zwischen den Flanken (64) der V-förmigen Dichtungs-Haltekontur (62) etwa zwischen 25° und 70° beträgt.

4. Fluid-Reinigungselement nach einem der vorigen Ansprüche, **dadurch gekennzeichnet, dass** das Dichtelement (60) an seiner bezüglich der Achse (22) radial inneren Umfangsseite wenigstens eine Dichtelement-Stützfläche (66) aufweist, wobei wenigstens ein Teil der Dichtelement-Stützfläche (66) als Dichtfläche ausgebildet ist, und/oder der Endkörper (42) an seiner bezüglich der Achse (22) radial äußeren Umfangsseite wenigstens eine Endkörper-Stützfläche (56) aufweist, wobei wenigstens ein Teil der Endkörper-Stützfläche (56) als Dichtfläche ausgebildet ist.

5. Fluid-Reinigungselement nach einem der vorigen Ansprüche, **dadurch gekennzeichnet, dass** wenigstens zwei nach radial innen gerichtete Radial-Stützflächenabschnitte (66b) insbesondere symmetrisch auf axial gegenüberliegenden Seiten der V-förmigen Vertiefung (62) des Dichtelements (60) angeordnet sind und/oder wenigstens zwei nach radial außen gerichtete Endkörper-Stützflächen (56) insbesondere symmetrisch auf axial gegenüberliegenden Seiten des Vorsprungs der Endkörper-Haltekontur (48) angeordnet sind.

6. Fluid-Reinigungselement nach einem der vorigen Ansprüche, **dadurch gekennzeichnet, dass** das Dichtelement (60) an seiner bezüglich der Achse (22) radial äußeren Umfangsseite ein bogenförmiges Profil aufweist.

7. Fluid-Reinigungselement nach einem der vorigen Ansprüche, **dadurch gekennzeichnet, dass** das Dichtelement (60) an wenigstens einer bezüglich der Achse (22) axialen Stirnseite wenigstens eine Dichtfläche (72) aufweist.

8. Fluid-Reinigungselement nach einem der vorigen Ansprüche, **dadurch gekennzeichnet, dass** der Endkörper (42) mit dem Dichtelement (60) als Mehrkomponentenbauteil realisiert ist und/oder das Dichtelement (60) an dem Endkörper (42) trennbar oder nicht zerstörungsfrei trennbar befestigt ist.

9. Fluid-Reinigungselement nach einem der vorigen Ansprüche, **dadurch gekennzeichnet, dass** der Endkörper (42) wenigstens eine Fluidverbindung (44) zu dem Elementinnenraum (40) aufweist.

10. Fluid-Reinigungselement nach einem der vorigen Ansprüche, **dadurch gekennzeichnet, dass** das Reinigungsmedium (38) als Filtermedium ausgestaltet ist und den Elementinnenraum (40) umgibt und in dem Elementinnenraum (40) wenigstens ein Teil wenigstens einer Wasserabscheideeinrichtung (76) angeordnet ist.

11. Fluid-Reinigungselement nach einem der vorigen Ansprüche, **dadurch gekennzeichnet, dass** der Endkörper (42) einteilig mit der Endkörper-Haltekontur (48) ausgestaltet ist und/ oder der Endkörper (42) mehrteilig mit der Endkörper-Haltekontur (48) ausgestaltet ist.

12. Fluid-Reinigungselement nach einem der vorigen Ansprüche, **dadurch gekennzeichnet, dass** auf der Seite des Reinigungsmediums (38; 138), welche dem Endkörper (42) mit dem Dichtelement (60) bezüglich der Achse (22) axial gegenüberliegt, wenigstens ein weiterer Endkörper (74) angeordnet ist.

13. Fluid-Reinigungssystem (10) zum Reinigen von flüssigem Fluid, mit einem Filtergehäuse (12), umfassend wenigstens ein erstes Gehäuseteil (14) und ein zweites Gehäuseteil (16), mit wenigstens einem Fluideinlass für zu reinigendes Fluid und wenigstens einen Fluidauslass für gereinigtes Fluid, wobei in dem Filtergehäuse (12) wenigstens ein Fluid-Reinigungselement (36; 136) nach einem der vorigen Ansprüche austauschbar so angeordnet ist, dass es den wenigstens einen Fluideinlass von dem wenigstens einen Fluidauslass trennt, wobei das Dichtelement (60) des Fluid-Reinigungselements (36; 136) an wenigstens einer Endkörper-Stützfläche (56) des Endkörpers (42) des Fluid-Reinigungselements (36; 136), an wenigstens einer ersten Gehäuse-Dichtungsanlagefläche (28) des ersten Gehäuseteils (14) und an wenigstens einer zweiten Gehäuse-Dichtungsanlagefläche (34) des zweiten Gehäuseteils (16) jeweils dichtend anliegt.

14. Dichtelement (60) eines Fluid-Reinigungselements (36; 136) nach einem der vorigen Ansprüche für ein Fluid-Reinigungssystem (10) zum Reinigen von flüssigem Fluid, wobei das Dichtelement (60) elastisch und ringförmig ist und an seiner bezüglich einer gedachten Achse (22) radial inneren Umfangsseite eine Dichtungs-Haltekontur (62) aufweist und wobei das Dichtelement (60) wenigstens eine Dichtfläche (70) aufweist, welche sich wenigstens über einen Teil der bezüglich der Achse (22) radial äußeren Umfangsseite des wenigstens einen Dichtelements (60) erstreckt, **dadurch gekennzeichnet, dass** die Dichtungs-Haltekontur (62) wenigstens eine V-förmige Vertiefung aufweist, welche sich bezüglich der Achse (22) wenigstens teilumfänglich und nach radial außen erstreckt.

## Claims

1. Fluid cleaning element (36; 136) of a fluid cleaning system (10) for cleaning liquid fluid, featuring at least one cleaning medium (38; 138) which at least partially delimits at least one element interior space (40), at least one end body (42) which is disposed at an axial front face, relative to an imaginary axis (22), on the fluid cleaning element (36; 136), and at least one elastic, annular sealing element (60), which is disposed on a radially outer circumferential side of the at least one end body (42) with respect to the imaginary axis (22), wherein the end body (42) features at least one end body holding contour (48) for the sealing element (60), said contour extending circumferentially at least section-wise contiguously on a radially outer circumferential side of the end body (42) with respect to the axis (22), wherein the sealing element (60) features on its radially inner circumferential side with respect to the axis (22) a seal holding contour (62) which rests at least section-wise against the end body holding contour (48) of the end body (42), wherein the sealing element (60) features at least one sealing surface (70) extending at least across a portion of the radially outer circumferential side of the sealing element (60) with respect to the axis (22), **characterized in that** the end body holding contour (48) features at least one projection extending at least partially circumferentially and radially outwardly with respect to the axis (22) and tapering from radially inwardly to radially outwardly, and the seal holding contour (62) features at least one V-shaped indentation extending at least partially circumferentially and radially outwardly with respect to the axis (22), wherein the end body holding contour (48) engages at least partially into the seal holding contour (62).

2. Fluid cleaning element according to claim 1, **characterized in that** the end body holding contour (48) features a V-shaped or U-shaped profile.

3. Fluid cleaning element according to claim 1 or 2, **characterized in that** an angle between the flanks (54) of the V-shaped end body holding contour (48) is approximately between 25° and 70° and/or an angle between the flanks (64) of the V-shaped seal holding contour (62) is approximately between 25° and 70°.

4. Fluid cleaning element according to one of the preceding claims, **characterized in that** the sealing element (60) features at least one sealing element supporting surface (66) on its radially inner circumferential side with respect to the axis (22), wherein at least one portion of the sealing element supporting surface (66) is designed as sealing surface, and/or **in that** the end body (42) features at least one end body supporting surface (56) on its radially outer circumferential side with respect to the axis (22), wherein at least one portion of the end body supporting surface (56) is designed as sealing surface.

5. Fluid cleaning element according to one of the preceding claims, **characterized in that** at least two radially inwardly directed radial supporting surface portions (66b) are disposed in particular symmetrically on axially opposing sides of the V-shaped indentation (62) of the sealing element (60) and/or **in that** at least two radially outwardly directed end body supporting surfaces (56) are disposed in particular symmetrically on axially opposing sides of the projection of the end body holding contour (48).

6. Fluid cleaning element according to one of the preceding claims, **characterized in that** the sealing element (60) features an arc-shaped profile on its radially outer circumferential side with respect to the axis (22).

7. Fluid cleaning element according to one of the preceding claims, **characterized in that** the sealing element (60) features at least one sealing surface (72) on at least one axial front face with respect to the axis (22).

8. Fluid cleaning element according to one of the preceding claims, **characterized in that** the end body (42) is realized as a multi-component element with the sealing element (60) and/or **in that** the sealing element (60) is attached to the end body (42) in a separable or non-destructively separable manner.

9. Fluid cleaning element according to one of the preceding claims, **characterized in that** the end body (42) features at least one fluid connection (44) to the element interior space (40).

10. Fluid cleaning element according to one of the preceding claims, **characterized in that** the cleaning medium (38) is designed as filter medium surrounding the element interior space (40) and **in that** at least one portion of at least one water-separating device (76) is disposed in the element interior space (40).

11. Fluid cleaning element according to one of the preceding claims, **characterized in that** the end body (42) is designed in one piece with the end body holding contour (48) and/or **in that** the end body (42) is designed in multiple pieces with the end body holding contour (48).

12. Fluid cleaning element according to one of the preceding claims, **characterized in that** on the side of the cleaning medium (38; 138), which axially opposes the end body (42) with the sealing element (60) with respect to the axis (22), at least one further end body (74) is disposed.

13. Fluid cleaning system (10) for cleaning liquid fluid, having a filter housing (12), comprising at least one first housing component (14) and a second housing component (16), having at least one fluid inlet for fluid to be cleaned and at least one fluid outlet for cleaned fluid, wherein at last one fluid cleaning element (36; 136) according to one of the preceding claims is replaceably disposed in the filter housing (12) in such a way that it separates the at least one fluid inlet from the at least one fluid outlet, wherein the sealing element (60) of the fluid cleaning element (36; 136) sealingly abuts at least one end body supporting surface (56) of the end body (42) of the fluid cleaning element (36; 136), at least one first housing sealing contact surface (28) of the first housing component (14), and at least one second housing sealing contact surface (34) of the second housing component (16), respectively.

14. Sealing element (60) of a fluid cleaning element (36; 136) according to one of the preceding claims for a fluid cleaning system (10) for cleaning liquid fluid, wherein the sealing element (60) is elastic and annular and features a seal holding contour (62) on its radially inner circumferential side with respect to an imaginary axis (22), and wherein the sealing element (60) features at least one sealing surface (70) extending at least across a portion of the radially outer circumferential side of the at least one sealing element (60) with respect to the axis (22), **characterized in that** the seal holding contour (62) features at least one V-shaped indentation extending at least partially circumferentially and radially outwardly with respect to the axis (22).

## Revendications

1. Élément de nettoyage de fluide (36; 136) d'un système de nettoyage de fluide (10) pour le nettoyage d'un fluide liquide, présentant au moins un milieu de nettoyage (38; 138) qui limite, au moins partiellement, au moins un espace intérieur d'élément (40), au moins un élément d'extrémité (42) qui est disposé en sens axialement frontal par rapport à un axe imaginaire (22) sur l'élément de nettoyage de fluide (36; 136) et au moins un élément d'étanchéité (60) élastique annulaire qui est disposé sur un côté circonférentiel radialement extérieur par rapport à l'axe imaginaire (22) de l'élément d'extrémité (42), au moins au nombre d'un, l'élément d'extrémité (42) présentant au moins un contour de retenue d'élément d'extrémité (48) pour l'élément d'étanchéité (60) qui évolue, sur un côté circonférentiel radialement extérieur par rapport à l'axe (22) de l'élément d'extrémité (42), de manière continue, au moins sur certaines sections, sur la circonférence, l'élément d'étanchéité (60) présentant, sur son côté circonférentiel radialement intérieur par rapport à l'axe (22), un contour de retenue d'étanchéité (62) qui touche, au moins sur certaines sections, le contour de retenue d'élément d'extrémité (48) de l'élément d'extrémité (42), l'élément d'étanchéité (60) présentant au moins une surface d'étanchéité (70) qui s'étend au moins sur une partie du côté circonférentiel radialement extérieur par rapport à l'axe (22) de l'élément d'étanchéité (60), **caractérisé en ce que** le contour de retenue d'élément d'extrémité (48) présente au moins un épaulement qui s'étend sur au moins une partie de la circonférence et en sens radialement extérieur par rapport à l'axe (22) et rétrécit du sens radialement intérieur vers le sens radialement extérieur, et le contour de retenue d'étanchéité (62) présente au moins un creux en V qui s'étend sur au moins une partie de la circonférence et en sens radialement extérieur par rapport à l'axe (22), le contour de retenue d'élément d'extrémité (48) s'engrenant au moins en partie dans le contour de retenue d'étanchéité (62).

2. Élément de nettoyage de fluide selon la revendication 1, **caractérisé en ce que** le contour de retenue d'élément d'extrémité (48) présente un profil en V ou en U.

3. Élément de nettoyage de fluide selon la revendication 1 ou 2, **caractérisé en ce qu'**un angle formé entre les flancs (54) du contour de retenue d'élément d'extrémité (48) en V est compris approximativement entre 25° et 70° et/ou un angle formé entre les flancs (64) du contour de retenue d'étanchéité (62) en V est compris approximativement entre 25° et 70°.

4. Élément de nettoyage de fluide selon l'une quelconque des revendications précédentes, **caractérisé en ce que** l'élément d'étanchéité (60) présente, sur son côté circonférentiel radialement intérieur par rapport à l'axe (22), au moins une surface d'appui d'élément d'étanchéité (66), au moins une partie de la surface d'appui d'élément d'étanchéité (66) étant exécutée en tant que surface d'étanchéité, et/ou **en ce que** l'élément d'extrémité (42) présente, sur son côté circonférentiel radialement extérieur par rapport à l'axe (22), au moins une surface d'appui d'élément d'extrémité (56), au moins une partie de la surface d'appui d'élément d'extrémité (56) étant exécutée en tant que surface d'étanchéité.

5. Élément de nettoyage de fluide selon l'une quelconque des revendications précédentes, **caractérisé en ce qu'**au moins deux sections de surface d'appui radiales (66b) dirigées radialement vers l'intérieur sont disposées notamment de manière symétrique sur des côtés axialement opposés du creux en V (62) de l'élément d'étanchéité (60), et/ou **en ce qu'**au moins deux surfaces d'appui d'élément d'extrémité (56) dirigées radialement vers l'extérieur sont disposées notamment de manière symétrique sur des côtés axialement opposés de l'épaulement du contour de retenue d'élément d'extrémité (48).

6. Élément de nettoyage de fluide selon l'une quelconque des revendications précédentes, **caractérisé en ce que** l'élément d'étanchéité (60) présente, sur son côté circonférentiel radialement extérieur par rapport à l'axe (22), un profil en forme d'arc.

7. Élément de nettoyage de fluide selon l'une quelconque des revendications précédentes, **caractérisé en ce que** l'élément d'étanchéité (60) présente, sur au moins un côté axialement frontal par rapport à l'axe (22), au moins une surface d'étanchéité (72).

8. Élément de nettoyage de fluide selon l'une quelconque des revendications précédentes, **caractérisé en ce que** l'élément d'extrémité (42) est exécuté en tant qu'ensemble à composants multiples avec l'élément d'étanchéité (60), et/ou en ce que l'élément d'étanchéité (60) est fixé à l'élément d'extrémité (42) de manière dissociable ou de manière indissociable sans destruction.

9. Élément de nettoyage de fluide selon l'une quelconque des revendications précédentes, **caractérisé en ce que** l'élément d'extrémité (42) présente au moins une liaison fluidique (44) à l'espace intérieur d'élément (40).

10. Élément de nettoyage de fluide selon l'une quelconque des revendications précédentes, **caractérisé en ce que** le milieu de nettoyage (38) est exécuté en tant que milieu filtrant et entoure l'espace intérieur d'élément (40) et **en ce qu'**au moins une partie d'au moins un dispositif de séparation d'eau (76) est disposée dans l'espace intérieur d'élément (40).

11. Élément de nettoyage de fluide selon l'une quelconque des revendications précédentes, **caractérisé en ce que** l'élément d'extrémité (42) est exécuté d'un seul tenant avec le contour de retenue d'élément d'extrémité (48), et/ou **en ce que** l'élément d'extrémité (42) est exécuté en plusieurs parties avec le contour de retenue d'élément d'extrémité (48).

12. Élément de nettoyage de fluide selon l'une quelconque des revendications précédentes, **caractérisé en ce qu'**au moins un autre élément d'extrémité (74) est disposé du côté du milieu de nettoyage (38; 138) qui est axialement opposé, par rapport à l'axe (22), à l'élément d'extrémité (42) avec l'élément d'étanchéité (60).

13. Système de nettoyage de fluide (10) pour le nettoyage d'un fluide liquide, ayant un boîtier de filtre (12), comprenant au moins un premier composant de boîtier (14) et un second composant de boîtier (16), ayant au moins une entrée de fluide pour le fluide à nettoyer et au moins une sortie de fluide pour le fluide nettoyé, au moins un élément de nettoyage de fluide (36; 136) selon l'une quelconque des revendications précédentes étant disposé de façon échangeable dans le boîtier de filtre (12) de manière à ce que cet élément sépare l'entrée de fluide, au moins au nombre d'une, de la sortie de fluide, au moins au nombre d'une, l'élément d'étanchéité (60) de l'élément de nettoyage de fluide (36; 136) s'appliquant de façon étanche sur au moins une surface d'appui d'élément d'extrémité (56) de l'élément d'extrémité (42) de l'élément de nettoyage de fluide (36; 136), sur au moins une première surface de contact d'étanchéité du boîtier (28) du premier composant de boîtier (14) et sur au moins une seconde surface de contact d'étanchéité du boîtier (34) du second composant de boîtier (16), respectivement.

14. Élément d'étanchéité (60) d'un élément de nettoyage de fluide (36; 136) selon l'une quelconque des revendications précédentes pour un système de nettoyage de fluide (10) pour le nettoyage d'un fluide liquide, l'élément d'étanchéité (60) étant élastique et annulaire et présentant, sur son côté circonférentiel radialement intérieur par rapport à un axe imaginaire (22), un contour de retenue d'étanchéité (62), et l'élément d'étanchéité (60) présentant au moins une surface d'étanchéité (70) qui s'étend au moins sur une partie du côté circonférentiel radialement extérieur, par rapport à l'axe (22), de l'élément d'étanchéité (60), au moins au nombre d'un, **caractérisé en ce que** le contour de retenue d'étanchéité (62) présente au moins un creux en V qui s'étend sur au moins une partie de la circonférence et en sens radialement extérieur par rapport à l'axe (22).
